# EUROPEAN PATENT APPLICATION

(11) **EP 4 421 241 A1**
(43) Date of publication of application: **28.08.2024**
(21) Application number: 23167655.2
(22) Date of filing: 13.04.2023
(51) Int. Cl.: E01H 1/00, E01H 15/00, E01H 1/08

(54) **GARBAGE CLEANING APPARATUS AND USING METHOD THEREOF**

(30) Priority: 24.02.2023 CN 202310167849
(71) Applicant: China Three Gorges Corporation, Wuhan, Hubei 430010 (CN); China Three Gorges Construction Engineering Corporation, Beijing 101199 (CN)
(72) Inventor: TAN, Zhiguo, Wuhan, Hubei 430010 (CN); GAO, Peng, Wuhan, Hubei 430010 (CN); GONG, Lei, Wuhan, Hubei 430010 (CN); ZHANG, Tingpeng, Wuhan, Hubei 430010 (CN)
(74) Representative: Patentanwälte und Rechtsanwalt Weiß, Arat & Partner mbB

(57) **Abstract**

The present disclosure relates to the technical field of garbage cleaning, in particular to a garbage cleaning apparatus and a using method thereof. The garbage cleaning apparatus includes a vehicle body; a boom structure disposed on the vehicle body and formed by hinging a plurality of sections of arm levers; and a residue suction structure disposed on the boom structure, wherein the residue suction structure includes two rotating rods disposed symmetrically, an air jet finger group is connected below each of the two rotating rods, a plurality of air jet fingers are provided in each group, gaps are reserved between every two adjacent air jet fingers in each group, the air jet fingers in the two groups are disposed oppositely in a staggered manner, air jet notches are formed in cutting edge ends of the air jet fingers, and in a grabbing state, the two air jet finger groups are respectively disposed on two sides of a to-be-cleaned area, one group of air jet fingers is driven to enter the gaps between the adjacent air jet fingers in the other group in an interdigitated manner so as to form an accommodating space by enclosure for grabbing sundries, or gas is jetted from the air jet notches of the air jet fingers so as to blow light garbage into the accommodating space. According to the present disclosure, the problem that there is a lack of a special garbage cleaning apparatus for greening areas is solved.

## Description

### TECHNICAL FIELD

The present disclosure relates to the technical field of garbage cleaning, in particular to a garbage cleaning apparatus and a using method thereof.

### BACKGROUND

With the continuous improvement of urban population size and living standards, more and more garbage has been produced in urban environments, and safe and efficient garbage cleaning has become a basic task of urban development. Generally, a relatively mature and efficient garbage cleaning mechanism has been formed in densely populated areas such as office and living areas, municipal pavements and greenbelt parks. For greening areas such as isolation belts, green belts, shrubs and street trees at the center or both sides of a dense traffic area such as a municipal trunk road, their dense branches often form a strip-shaped or block-shaped semi-open and semi-closed space which often contains light garbage such as paper scraps, plastic bags, fallen leaves and weeds on the surface or inside to pollute a surrounding environment and affect the beauty of a city. Generally, the above-mentioned light garbage is mainly cleaned manually, and sometimes, it is necessary to temporarily close a certain section and a certain lane, which is lower in efficiency and affects the traffic, moreover, a dense traffic flow poses a threat to the personal safety of environmental sanitation personnel and brings major potential safety hazards.

At present, an urban garbage cleaning device mainly covers hardened grounds of municipal trunk roads, streets and communities, and there is no special garbage cleaning device for the greening areas such as the isolation belts, the green belts, the shrubs and the street trees on the municipal trunk roads.

### SUMMARY

Therefore, a technical problem to be solved in the present disclosure is to overcome the defect that there is a lack of a special garbage cleaning apparatus for greening areas such as isolation belts, green belts, shrubs and street trees on municipal trunk roads in the prior art, thereby providing a garbage cleaning apparatus and a using method thereof.

In order to solve the above-mentioned problem, the present disclosure provides a garbage cleaning apparatus, including:
a vehicle body;
a boom structure disposed on the vehicle body and formed by hinging a plurality of sections of arm levers; and
a residue suction structure disposed on the boom structure, wherein the residue suction structure includes two rotating rods disposed symmetrically, an air jet finger group is connected below each of the rotating rods, a plurality of air jet fingers are provided in each air jet finger group, gaps are reserved between every two adjacent air jet fingers in each air jet finger group, the air jet fingers in the two air jet finger groups are disposed oppositely in a staggered manner, air jet notches are formed in cutting edge ends of the air jet fingers, and in a grabbing state, the two air jet finger groups are respectively disposed on two sides of a to-be-cleaned area, one of the air jet finger groups is driven to enter the gaps between the adjacent air jet fingers in the other group in an interdigitated manner so as to encircle the to-be-cleaned area, and in the process, an accommodating space is formed between the air jet finger groups to grab sundries, or gas is jetted from the air jet notches of the air jet fingers so as to blow light garbage into the accommodating space.

Optionally, the residue suction structure includes a dust suction hood and the rotating rods, one end of the dust suction hood is fixed below a connecting seat of the residue suction structure, and a lower end of the dust suction hood is rotatably connected with upper hinge points on the rotating rods by connecting levers.

Optionally, one end of each of the rotating rods is provided with one of the air jet finger groups, the other end of each of the rotating rods is rotatably connected with a telescopic rod, and each telescopic rod is configured to stretch or retract to drive the corresponding rotating rod to rotate relative to the dust suction hood so that the air jet finger group located below the rotating rods can be withdrawn to an upside of a bottom surface of the dust suction hood, an elastic return part is further disposed below each telescopic rod, and the dust suction hood is further provided with a sensor and a camera which are respectively in communication connection with the controller.

Optionally, the connecting seat is provided with residue extraction holes disposed to face ends of the air jet fingers, and the residue extraction holes are connected with a residue extraction pipe.

Optionally, the residue suction structure further includes a connecting arm, the connecting arm is rotatably connected with the connecting seat and is provided with a first power part, an output end of the first power part is provided with a first driving wheel, the connecting seat is provided with a first driven wheel, and the first driving wheel is disposed to be meshed with the first driven wheel.

Optionally, an end, away from the connecting seat, of the connecting arm is hinged with the boom structure, the boom structure is provided with a second power part, an output end of the second power part is provided with a second driving wheel, the connecting seat is provided with a second driven wheel, and the second driving wheel is disposed to be meshed with the second driven wheel.

Optionally, the vehicle body is provided with a garbage can and an inflation pump, a residue inlet of the garbage can is provided with a residue suction pump for supplying power, and the inflation pump is connected to the air jet fingers by pipelines.

Optionally, a walking structure is disposed below the vehicle body, the vehicle body is rotatably connected with the walking structure. The vehicle body is provided with a control room in which a controller is disposed, the controller automatically regulates a working state of the entire device, and the vehicle body is further provided with a width-indication lamp and a warning buzzer.

Provided is a using method of a garbage cleaning apparatus. In a grabbing state, one group of air jet fingers is driven to enter gaps between adjacent air jet fingers in the other group in an interdigitated manner, and in the process, an accommodating space is formed by enclosure to grab sundries, or gas is jetted from air jet notches of the air jet fingers so as to blow light garbage from the ground or shrubs into the accommodating space.

Optionally, the using method includes the following steps:
when cleaning garbage on tops and in the middles of shrubs:
1) starting and adjusting a device: starting an apparatus in a control room by field personnel, providing power by a power structure to drive the entire apparatus to advance to a green belt of a road, and operating a controller to control a rotating structure to drive the control room and a boom structure to face the green belt; next, adjusting telescopic states of telescopic rods to enable elastic return parts to be in a compressed state and two rotating rods to be in a separated state, adjusting an overturning cylinder and a second power part to drive a residue suction structure to move downwards, driving a first driven wheel to rotate by a first power part, adjusting the residue suction structure to cover a surface of the green belt, and enabling the rotating rods to be respectively disposed on two sides of the green belt;
2) blowing up garbage on a surface: transmitting communication signal to the controller by a sensor and a camera, and automatically adjusting the overturning cylinder and the second power part by the controller 7 so that the boom structure and the residue suction structure are finely adjusted; next, controlling the telescopic rods to stretch to drive the rotating rods to rotate around upper hinge points and connecting levers and push the rotating rods and air jet finger groups on ends thereof to enter the green belt, starting an inflation pump to compress air, so that the compressed air reaches air jet fingers along an inflation pipe to blow up light garbage in the green belt; and
3) sucking the garbage: starting a residue suction pump by the controller, forming a negative pressure in an accommodating space formed between each of the air jet finger groups on the ends of the two rotating rods and a dust suction hood, so that the light garbage between the two groups of air jet fingers enters a garbage can through a residue extraction pipe; and
when cleaning garbage on the ground:
in the case that garbage on the ground needs to be cleaned, driving, by the controller, the telescopic rods to drive the rotating rods to withdraw the air jet fingers to an upside of a bottom surface of the dust suction hood so that the dust suction hood can be fitted on the ground to suck garbage or sundries on the ground.

The technical solutions of the present disclosure have the following advantages.
1. The garbage cleaning apparatus provided by the present disclosure includes a vehicle body; a boom structure disposed on the vehicle body and formed by hinging a plurality of sections of arm levers; and a residue suction structure disposed on the boom structure, wherein the residue suction structure includes two rotating rods disposed symmetrically, an air jet finger group is connected below each of the rotating rods, a plurality of air jet fingers are provided in each air jet finger group, gaps are reserved between every two adjacent air jet fingers in each air jet finger group, the air jet fingers in the two groups are disposed oppositely in a staggered manner, air jet notches are formed in cutting edge ends of the air jet fingers, and in a grabbing state, one group of air jet fingers is driven to enter the gaps between the adjacent air jet fingers in the other group in an interdigitated manner so as to form an accommodating space by enclosure to grab sundries, or gas is jetted from the air jet notches of the air jet fingers so as to blow light garbage from the ground or shrubs into the accommodating space. The gaps are reserved between every two adjacent air jet fingers in each air jet finger group, the air jet fingers in the two groups are disposed oppositely in the staggered manner, and in the grabbing state, one group of the air jet fingers is driven to enter the gaps between the adjacent air jet fingers in the other group in an interdigitated manner, that is, the air jet fingers in one of the air jet finger groups are disposed to be opposite to the gaps between the air jet fingers in the other air jet finger group so that one group of air jet fingers is driven to enter the gaps between the adjacent air jet fingers in the other group in an interdigitated manner. In the grabbing state, in a process that the two air jet finger groups are driven to form a closed space by enclosure, gas is jetted from the air jet fingers to blow the remaining light garbage into the closed space. In the grabbing state, the two air jet finger groups are respectively disposed on two sides of a to-be-cleaned area, the two air jet finger groups may grab a part of light garbage (such as garbage on tops of shrubs and green belts) in greening areas into the accommodating space in the process of opening to closing, the air jet fingers in the air jet finger groups are inserted into the green belts or the shrubs to enclose the garbage on the tops of the shrubs and the green belts, and meanwhile, gas is blown from the cutting edge ends of the air jet fingers, and the light garbage is blown up by the gas so as to be sucked. In a process that light garbage from insolation belts, shrubs, green belts and street trees is cleaned, garbage in corresponding areas is specially cleaned by using the garbage cleaning apparatus in the present application instead of environmental sanitation personnel, and therefore, potential safety hazards existing during cleaning are eliminated.
2. According to the garbage cleaning apparatus provided by the present disclosure, the residue suction structure includes a dust suction hood and the rotating rods, one end of the dust suction hood is fixed below a connecting seat of the residue suction structure, and a lower end of the dust suction hood is rotatably connected with upper hinge points on the rotating rods by connecting levers to provide support from the rotating rods, and the rotating rods drive the two air jet finger groups to be opened or closed during rotation.
3. According to the garbage cleaning apparatus provided by the present disclosure, one end of each of the rotating rods is provided with one of the air jet finger groups, the other end of each of the rotating rods is rotatably connected with a telescopic rod, and each telescopic rod is configured to stretch or retract to drive the corresponding rotating rod to rotate relative to the dust suction hood so that the air jet fingers located below the rotating rods can be withdrawn to an upside of a bottom surface of the dust suction hood, an elastic return part is further disposed below each telescopic rod so as to drive the air jet finger groups to return. The dust suction hood is further provided with a sensor and a camera to sense and shoot garbage.
4. According to the garbage cleaning apparatus provided by the present disclosure, the connecting seat is provided with residue extraction holes disposed to face ends of the air jet fingers, and the residue extraction holes are connected with a residue extraction pipe so that light garbage in the accommodating space is extracted.
5. According to the garbage cleaning apparatus provided by the present disclosure, the residue suction structure further includes a connecting arm, the connecting arm is rotatably connected with the connecting seat and is provided with a first power part, an output end of the first power part is provided with a first driving wheel, the connecting seat is provided with a first driven wheel, the first driving wheel is disposed to be meshed with the first driven wheel, the connecting arm drives the first driving wheel to rotate through the first power part, and the first driving wheel drives the first driven wheel to rotate so that the dust suction hood rotates relative to the connecting seat.
6. According to the garbage cleaning apparatus provided by the present disclosure, an end, away from the connecting seat, of the connecting arm is hinged with the boom structure, the boom structure is provided with a second power part, an output end of the second power part is provided with a second driving wheel, the connecting seat is provided with a second driven wheel, and the second driving wheel is disposed to be meshed with the second driven wheel so as to drive the connecting seat to rotate relative to the boom structure.
7. According to the garbage cleaning apparatus provided by the present disclosure, the vehicle body is further provided with a garbage can and an inflation pump, a residue inlet of the garbage can is provided with a residue suction pump for providing power, and the inflation pump is connected to the air jet fingers by pipelines through which gas is blown out by the air jet fingers.
8. According to the garbage cleaning apparatus provided by the present disclosure, a walking structure is disposed below the vehicle body, and the vehicle body is rotatably connected with the walking structure. The vehicle body is provided with a control room in which a controller is disposed, the controller automatically regulates a working state of the entire apparatus, and the vehicle body is provided with a width-indication lamp and a warning buzzer to play a caution role.

### BRIEF DESCRIPTION OF THE DRAWINGS

To describe the technical solutions in specific implementations of the present disclosure or the prior art more clearly, the accompanying drawings required for describing the specific implementations or the prior art will be briefly introduced below. Apparently, the accompanying drawings in the following description show only some implementations of the present disclosure, and those of ordinary skill in the art may still derive other accompanying drawings from these accompanying drawings without creative efforts.
Fig. 1 is a main view of a garbage cleaning apparatus provided in an implementation of the present disclosure;
Fig. 2 is a top view of a garbage cleaning apparatus provided in an implementation of the present disclosure;
Fig. 3 is a schematic structural view of a residue suction structure provided in an implementation of the present disclosure;
Fig. 4 is a schematic view of connection between an inflation pipe and each of rotating rods provided in an implementation of the present disclosure;
Fig. 5 is a schematic view of a dust suction hood located above shrubs provided in an implementation of the present disclosure; and
Fig. 6 is a top view of a garbage cleaning apparatus provided in an implementation of the present disclosure.

Description for reference numerals in accompanying drawings: 1. walking structure; 2. rotating structure; 3. vehicle body; 4. power structure; 5. inflation pump; 6. control room; 7. controller; 8. boom structure; 9. overturning cylinder; 10. inflation pipe; 11. residue extraction pipe; 12. line; 13. second power part; 14. second driven wheel; 15. first power part; 16. first driven wheel; 17. connecting seat; 18. dust suction hood; 19. telescopic rod; 20. rotating rod; 21. elastic return part; 22. air jet finger group; 23. upper hinge point; 24. sensor; 25. camera; 26. connecting lever; 27. residue suction pump; and 28. garbage can.

### DETAILED DESCRIPTION

The technical solutions of the present disclosure will be described clearly and completely below with reference to the accompanying drawings. Apparently, the described embodiments are a part of the embodiments of the present disclosure, but not all of the embodiments. Based on the embodiments of the present disclosure, all other embodiments obtained by those of ordinary skill in the art without creative efforts shall fall within the protection scope of the present disclosure.

In the description of the present disclosure, it should be noted that directional or positional relationships indicated by terms such as "center", "upper", "lower", "left", "right", "vertical", "horizontal", "inner" and "outer" are directional or positional relationships based on the accompanying drawings, are merely intended to facilitate describing the present disclosure and simplifying the description, rather than to indicate or imply that the appointed apparatus or element has to be located in a specific direction or structured and operated in the specific direction so as not to be understood as restrictions on the present disclosure. In addition, terms such as "first", "second" and "third" are for descriptive purposes only, and cannot be understood as indicating or implying the relative importance.

In the description of the present disclosure, it should be noted that terms "mounted" , "connected" and "connection" should be understood in a broad sense unless otherwise specified and defined, for example, "connection" may be fixed connection or detachable connection or integrated connection, may be mechanical connection or electrical connection, may be direct connection or indirect connection through an intermediate medium, and may be internal connection of two elements. For those of ordinary skill in the art, the specific meanings of the above terms in the present disclosure may be understood according to specific situations.

In addition, the technical features involved in the following described different implementations of the present disclosure may be combined with each other without conflicts.

### Embodiment 1

A garbage cleaning apparatus provided by the present disclosure includes a vehicle body 3;
a boom structure 8 disposed on the vehicle body 3 and formed by hinging a plurality of sections of arm levers; and
a residue suction structure disposed on the boom structure 8, wherein the residue suction structure includes two rotating rods 20 disposed symmetrically, an air jet finger group 22 is connected below each of the rotating rods 20, a plurality of air jet fingers are provided in each air jet finger group 22, each of air jet fingers is disposed on the rotating rods 20 in a parallel manner, gaps are reserved between every two adjacent air jet fingers in each air jet finger group 22, the air jet fingers in the two groups are disposed oppositely in a staggered manner, air jet notches are formed in cutting edge ends of the air jet fingers, and in a grabbing state, one group of air jet fingers is driven to enter the gaps between the adjacent air jet fingers in the other group in an interdigitated manner, and in the process, an accommodating space is formed by enclosure to grab sundries, or gas is jetted from the air jet notches of the air jet fingers so as to blow light garbage into the accommodating space.

The gaps are reserved between every two adjacent air jet fingers in each air jet finger group 22, the air jet fingers in the two groups are disposed oppositely in the staggered manner, and in the grabbing state, one of the air jet finger groups 22 is driven to enter the gaps between the adjacent air jet fingers in the other group in an interdigitated manner, that is, the air jet fingers in one of the air jet finger groups 22 are disposed to be opposite to the gaps between the air jet fingers in the other air jet finger group 22 so that one group of air jet fingers is driven to enter the gaps between the adjacent air jet fingers in the other group in an interdigitated manner. In the grabbing state, the two air jet finger groups 22 are respectively disposed on two sides of a to-be-cleaned area, the two air jet finger groups may grab a part of light garbage (such as garbage on tops of shrubs and green belts) in greening areas into the accommodating space in a process of opening to closing, the air jet fingers in the air jet finger groups 22 are inserted into the green belts or the shrubs to enclose the garbage in the shrubs and the green belts, and meanwhile, gas is blown from the cutting edge ends of the air jet fingers, and the light garbage is blown up by the gas so as to be sucked. In a process that light garbage from insolation belts, shrubs, green belts and street trees is cleaned, garbage in corresponding areas is specially cleaned by using the garbage cleaning apparatus in the present application instead of environmental sanitation personnel, and therefore, potential safety hazards existing during cleaning are eliminated.

### Embodiment 2

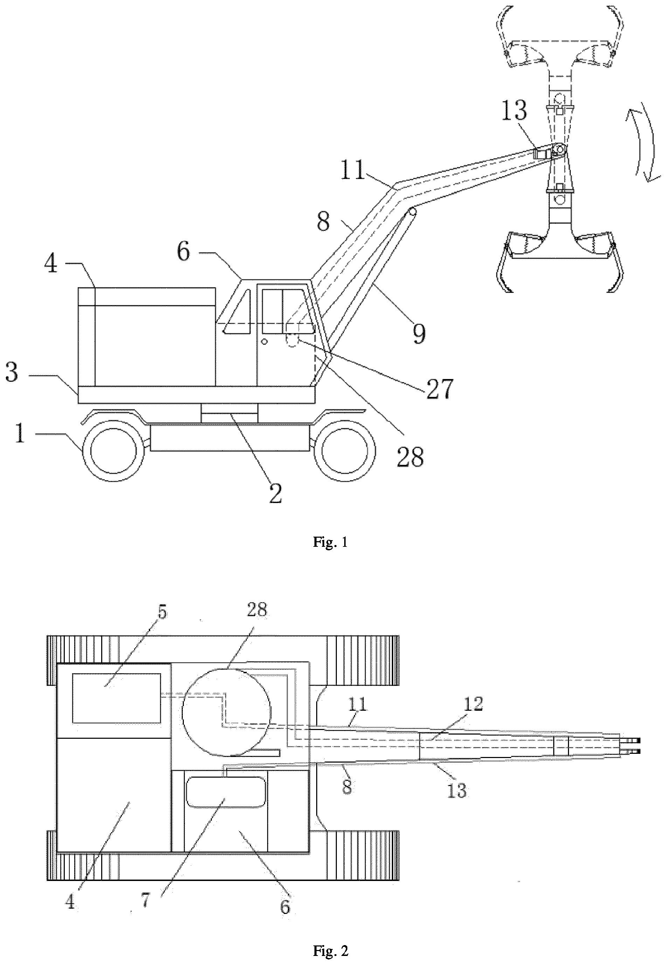

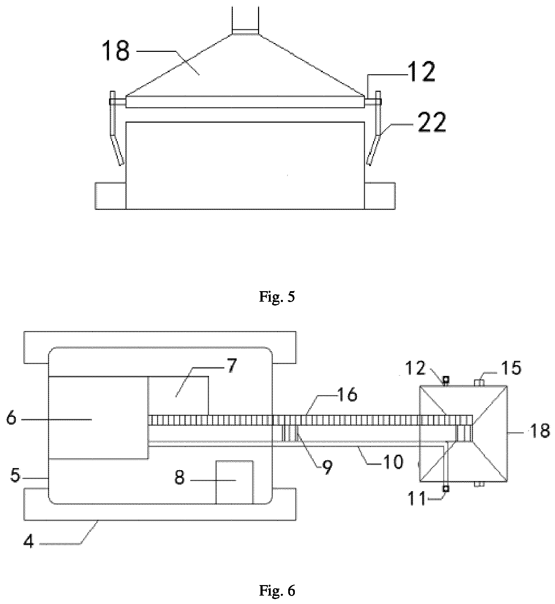

In a specific implementation of a garbage cleaning apparatus shown in Fig. 1 to Fig. 6, the garbage cleaning apparatus includes a vehicle body 3, wherein a walking structure 1 is disposed below the vehicle body 3, one end of the vehicle body 3 is provided with a boom structure 8, and an end, away from the vehicle body 3, of a boom is provided with a residue suction structure.

As shown in Fig. 1, the walking structure 1 is in contact with the ground and is a crawler-type or rubber-tyred structure so as to walk under different road conditions. A rotating structure 2 is disposed between the walking structure 1 and the vehicle body 3 which are rotatably connected to drive the vehicle body 3 to rotate as a whole in a whole circumferential direction, and a controller 7 is in communication connection with the rotating structure 2 and the walking structure 1.

As shown in Fig. 1 and Fig. 2, the vehicle body 3 is used for bearing a load and is provided with a garbage can 28, an inflation pump 5, a control room 6 and a power structure 4, wherein fuel oil is taken as a power source of the power structure 4 so as to provide stable power for the apparatus. The inflation pump 5 can provide air power with a positive or negative pressure. In order to facilitating controlling the entire apparatus, the vehicle body 3 is provided with a control room in which the controller 7 is disposed, and the controller 7 automatically regulates a working state of the entire device. In order to play a warning role, the vehicle body 3 is further provided with a width-indication lamp and a warning buzzer for reminding passing pedestrians and vehicles of safety, wherein the controller 7 is in communication connection with the width-indication lamp, the warning buzzer and the power source of the power structure, respectively.

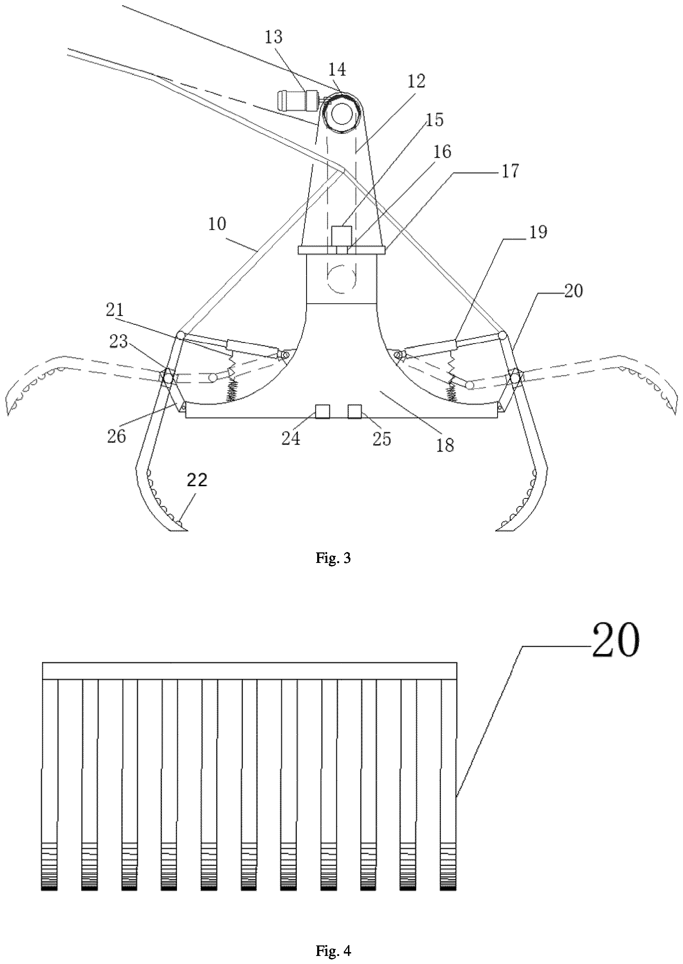

As shown in Fig. 1 and Fig. 3, the boom structure 8 includes a plurality of sections of hinged mechanical booms, an overturning cylinder 9, an inflation pipe 10, a residue extraction pipe 11, a line 12 and a second power part 13, wherein the booms are of multi-section supporting structures so as to provide support for the residue suction structure and to be also capable of providing channels and support for the line 12, the inflation pipe 10 and the residue extraction pipe 11, the overturning cylinder 9 is used for regulating rotation directions of the mechanical booms so as to achieve upward or downward regulation of the mechanical booms. The second power part 13 is used for regulating rotation directions of the residue suction structure so as to achieve upward or downward regulation of the residue suction structure. The line 12 is connected with the controller 7 so as to provide power and a control signal to the mechanical booms, the overturning cylinder 9, the second power part 13 and the residue suction structure; the second power part 13 drives the residue suction structure to overturn up and down to achieve a function that the residue suction structure rotates as a whole for 180 DEG or above, thereby cleaning the garbage such as residual branches and residual leaves on tall trees; the overturning cylinder 9 and the second power part 13 of the booms can be controlled to cooperate with elastic return parts 21, so that clearance heights of rotating rods 20 can be regulated; and meanwhile, a function of cleaning garbage within a range of the residue suction structure can be achieved by utilizing air jet fingers.

As shown in Fig. 3, the residue suction structure includes a connecting arm and a connecting seat 17 which are rotatably connected and two rotating rods 20 which are disposed symmetrically, an air jet finger group 22 is connected below each of the rotating rods 20, and the two air jet finger groups 22 may be driven to form a relatively closed accommodating space by enclosure, so that relatively heavy or light garbage or sundries can be grabbed. In order to achieve connection between each of the air jet finger groups 22 and the connecting seat 17, a dust suction hood 18 fixedly connected with the connecting seat 17, two rotating rods 20, two telescopic rods 19 and two upper hinge points 23 are included at least, wherein one end of the dust suction hood 18 is fixed on a lower part of the connecting seat 17, the other end thereof is rotatably connected with middle sections of the rotating rods 20 by connecting levers 26 by virtue of the upper hinge points 23, and the connecting levers 26 enable the rotating rods 20 to rotate for a larger angle, wherein the rotating rods 20 are in communication connection with the controller 7. In order to drive the two groups of air jet fingers to be separated and closed, one end of each of the rotating rods 20 is provided with one of the telescopic rods 19, and each telescopic rod 19 is configured to stretch or retract to drive the corresponding rotating rod 20 to rotate relative to the dust suction hood 18, wherein the telescopic rods 19 are in communication connection with the controller. Specifically, the telescopic rods 19 are hydraulic cylinders or air cylinders. In order to facilitating the return of the rotating rods 20, the elastic return parts 21 are further disposed below cylinder bodies of the telescopic rods 19. Specifically, the elastic return parts 21 are springs. In order to blow light garbage between the two groups of air jet fingers into the accommodating space, air jet notches are formed in cutting edge ends of the air jet fingers, and the air jet fingers are connected together with the inflation pump 5 by the hollow inflation pipe 10. In order to facilitating observing a state in the accommodating space formed between the two groups of air jet fingers, the connecting seat 17 is further provided with a sensor 24 and a camera 25 which are disposed to face the cutting edge ends, and the sensor 24 and the camera 25 are respectively in communication connection with the controller 7 to feed back a signal and an image to the controller 7, thereby facilitating automatic regulation of the controller 7. In order to extract light garbage in the accommodating space formed between the two groups of air jet fingers, the connecting seat 17 is provided with residue extraction holes disposed to face the cutting edge ends, and the residue extraction holes are connected with the garbage can 28 by a residue extraction pipe 11.

As shown in Fig. 3, in order to achieve mutual rotation between the dust suction hood 18 and the connecting seat 17, the connecting seat 17 is provided with a first power part 15, an output end of the first power part 15 is provided with a first driving wheel, the dust suction hood 18 is provided with a first driven wheel 16, and the first driving wheel is disposed to be meshed with the first driven wheel 16, so that the rotation of the residue suction structure is achieved. In order to drive the residue suction structure to rotate up and down, an end, away from the connecting seat 17, of the connecting arm is hinged with the boom structure 8, the boom structure 8 is provided with a second power part 13, an output end of the second power part 13 is provided with a second driving wheel, the connecting seat 17 is provided with a second driven wheel 14, and the second driving wheel is disposed to be meshed with the second driven wheel 14, so that the residue suction structure is driven to overturn up and down. It should be noted that the controller 7 is in communication connection with the first power part 15 and the second power part 13, respectively.

Provided is a using method of a garbage cleaning apparatus, including the following steps:
when garbage on tops and in the middles of shrubs is cleaned:
1) a device is started and adjusted: an apparatus is started in a control room 6 by field personnel, power is provided by a power structure 4 to drive the entire apparatus to advance to a green belt of a road, and a controller 7 is operated to control a rotating structure 2 to drive the control room 6 and a boom structure 8 to face the green belt; next, retraction states of telescopic rods 19 are adjusted to enable elastic return parts 21 to be in a compressed state and rotating rods 20 are also in a retraction state, an overturning cylinder 9 and a second power part 13 are adjusted to drive a residue suction structure to move downwards, a first driven wheel 16 is driven by a first power part 15 to rotate, the residue suction structure is adjusted to cover a surface of the green belt, and the rotating rods 20 are enabled to be respectively disposed on two sides of the green belt;
2) garbage on a surface is blown up: communication signal is transmitted to the controller 7 by a sensor 24 and a camera 25, and the overturning cylinder 9 and the second power part 13 are automatically adjusted by an automatic control system of the controller 7 according to a working signal so that the boom structure 8 and the residue suction structure are finely adjusted; next, the telescopic rods 19 are controlled to stretch to drive the rotating rods 20 to rotate around upper hinge points 23 and push the rotating rods 20 and air jet finger groups 22 on ends thereof to enter the green belt, an inflation pump 5 is started to compress air, so that the compressed air reaches air jet fingers along an inflation pipe 10 to blow up light garbage in the green belt; and
3) the garbage is sucked: at the same time, a residue suction pump 27 is started automatically, a negative pressure is formed in an accommodating space formed between each of the air jet finger groups 22 on the ends of the two rotating rods 20 and a dust suction hood 18, so that the light garbage between the two groups of air jet fingers enters a garbage can 28 through a residue extraction pipe 11; and
when garbage on the ground is cleaned:
in the case that garbage on the ground needs to be cleaned, the telescopic rods 19 can also be driven to drive the rotating rods 20 to withdraw the air jet fingers to an upside of a bottom surface of the dust suction hood 18 so that the dust suction hood 18 can be fitted on the ground to suck garbage or sundries on the ground, and a better cleaning effect is achieved within a shorter distance.

It needs to be noted that a residue suction effect is observed in real time by the camera 25, and areas where cleaning effects are poor can be cleaned repeatedly, so that the garbage cleaning quality and efficiency can be improved. When garbage on different heights, such as garbage including residual branches and residual leaves on tall trees, needs to be treated, the second power part 13 is controlled to drive the second driven wheel 14 to drive the residue suction structure to rotate, so that openings of the rotating rods 20 are upward, and then, the garbage is cleaned in a similar manner as above.

The present application has the following advantages: (1) provided is a novel device integrated with garbage cleaning, treatment, storage and transportation, by which garbage in greening areas such as isolation belts, green belts, shrubs and street trees on municipal trunk roads can be cleaned safely, efficiently and conveniently, not only can garbage on the surfaces or inside of block-shaped areas such as street tree crowns and shrubs and garbage inside the green belts and the isolation belts be cleaned deeply, but also garbage on the ground can be cleaned; (2) provided is an efficient residue suction cleaning apparatus capable of flexibly working, by which automatic flow operation of cleaning garbage on surfaces of strip-shaped isolation belts and green belts can be achieved, deep cleaning for the insides of various green belts, shrubs and crowns can also be achieved, and the characteristics such as safety, economic efficiency, high efficiency and convenience are achieved during operation; and (3) the provided garbage cleaning device can be equipped with various walking devices such as a wheel-type walking device and a crawler-type walking device, can use various power sources such as gas, fuel oil and stored energy, can achieve automatic flow operation, can also be manually operated, can be applied to green belts, isolation belts and street trees on municipal trunk roads and can also be widely applied to areas such as municipal parts, grasslands, forest lands and greening areas of communities so as to have the characteristics of wide application range as well as strong universality and practicability.

As an alternative implementation, the walking structure 1 may also be in other forms such as a wheel-type structure.

As an alternative implementation, the controller 7 may be automatically operated or manually operated.

As an alternative implementation, the overturning cylinder 9 and the telescopic rods 19 may be air cylinders, hydraulic cylinders, etc.

As an alternative implementation, the power source of the power structure 4 may also be other energy sources such as natural gas and electric power.

Apparently, the above-mentioned embodiments are merely intended to clearly describe examples, rather than to limit the implementations. Those of ordinary skill in the art can also make other variations or alterations in different forms on the basis of the above-mentioned description. It is unnecessary and impossible to exhaustively list all the implementations herein. Apparent variations or alterations derived from these still fall within the protection scope of the present disclosure.

## Claims

1. A garbage cleaning apparatus, comprising:
a vehicle body (3);
a boom structure (8) disposed on the vehicle body (3) and formed by hinging a plurality of sections of arm levers; and
a residue suction structure disposed on the boom structure (8), wherein the residue suction structure comprises two rotating rods (20) disposed symmetrically, an air jet finger group (22) is connected below each of the rotating rods (20), a plurality of air jet fingers are provided in each air jet finger group (22), gaps are reserved between every two adjacent air jet fingers in each air jet finger group (22), the air jet fingers in the two air jet finger groups (22) are disposed oppositely in a staggered manner, air jet notches are formed in cutting edge ends of the air jet fingers, and in a grabbing state, the two air jet finger groups (22) are respectively disposed on two sides of a to-be-cleaned area, one of the air jet finger groups (22) is driven to enter the gaps between the adjacent air jet fingers in the other group in an interdigitated manner so as to encircle the to-be-cleaned area, and in the process, an accommodating space is formed between the air jet finger groups (22) to grab sundries, or gas is jetted from the air jet notches of the air jet fingers so as to blow light garbage into the accommodating space.

2. The garbage cleaning apparatus of claim 1, wherein the residue suction structure comprises a dust suction hood (18) and the rotating rods (20), one end of the dust suction hood (18) is fixed below a connecting seat (17) of the residue suction structure, and a lower end of the dust suction hood (18) is rotatably connected with upper hinge points (23) on the rotating rods (20) by connecting levers (26).

3. The garbage cleaning apparatus of claim 2, wherein one end of each of the rotating rods (20) is provided with one of the air jet finger groups (22), the other end of each of the rotating rods (20) is rotatably connected with a telescopic rod (19), and each telescopic rod (19) is configured to stretch or retract to drive the corresponding rotating rod (20) to rotate relative to the dust suction hood (18) so that the air jet fingers located below the rotating rods (20) can be withdrawn to an upside of a bottom surface of the dust suction hood (18), an elastic return part (21) is further disposed below each telescopic rod (19), and the dust suction hood is further provided with a sensor (24) and a camera (25).

4. The garbage cleaning apparatus of claim 2, wherein the connecting seat (17) is provided with residue extraction holes disposed to face ends of the air jet fingers, and the residue extraction holes are connected with a residue extraction pipe (11).

5. The garbage cleaning apparatus of claim 2, wherein the residue suction structure further comprises a connecting arm, the connecting arm is rotatably connected with the connecting seat (17) and is provided with a first power part (15), an output end of the first power part (15) is provided with a first driving wheel, the connecting seat (17) is provided with a first driven wheel (16), and the first driving wheel is disposed to be meshed with the first driven wheel (16).

6. The garbage cleaning apparatus of claim 5, wherein an end, away from the connecting seat (17), of the connecting arm is hinged with the boom structure (8), the boom structure (8) is provided with a second power part (13), an output end of the second power part (13) is provided with a second driving wheel, the connecting seat (17) is provided with a second driven wheel (14), and the second driving wheel is disposed to be meshed with the second driven wheel (14).

7. The garbage cleaning apparatus of claim 5, wherein the vehicle body (3) is provided with a garbage can (28) and an inflation pump (5), a residue inlet of the garbage can (28) is provided with a residue suction pump (27), and the inflation pump (5) is connected to the air jet fingers by pipelines.

8. The garbage cleaning apparatus of any one of claims 1 to 7, wherein a walking structure (1) is disposed below the vehicle body (3), the vehicle body (3) is rotatably connected with the walking structure (1), the vehicle body (3) is provided with a control room in which a controller (7) is disposed, the controller (7) is configured to automatically regulate a working state, and the vehicle body (3) is further provided with a width-indication lamp and a warning buzzer.

9. A using method of a garbage cleaning apparatus, for using the garbage cleaning apparatus of claim 1, wherein, in a grabbing state, one group of air jet fingers is driven to enter gaps between adjacent air jet fingers in the other group in an interdigitated manner, and in the process, an accommodating space is formed by enclosure to grab sundries, or gas is jetted from air jet notches of the air jet fingers so as to blow light garbage from the ground or shrubs into the accommodating space.

10. The using method of the garbage cleaning apparatus of claim 9, comprising the following steps:
when cleaning garbage on tops and in the middles of shrubs:
1) starting and adjusting a device: starting an apparatus in a control room (6) by field personnel, providing power by a power structure (4) to drive the entire apparatus to advance to a green belt of a road, and operating a controller (7) to control a rotating structure (2) to drive the control room (6) and a boom structure (8) to face the green belt; next, adjusting telescopic states of telescopic rods (19) to enable elastic return parts (21) to be in a compressed state and two rotating rods (20) to be in a separated state, adjusting an overturning cylinder (9) and a second power part (13) to drive a residue suction structure to move downwards, driving a first driven wheel (16) to rotate by a first power part (15), adjusting the residue suction structure to cover a surface of the green belt, and enabling the rotating rods (20) to be respectively disposed on two sides of the green belt;
2) blowing up garbage on a surface: transmitting communication signal to the controller (7) by a sensor (24) and a camera (25), and automatically adjusting the overturning cylinder (9) and the second power part (13) by the controller (7) so that the boom structure (8) and the residue suction structure are finely adjusted; next, controlling the telescopic rods (19) to stretch to drive the rotating rods (20) to rotate around upper hinge points (23) and connecting levers (26) and push the rotating rods (20) and air jet finger groups (22) on ends thereof to enter the green belt, starting an inflation pump (5) to compress air, so that the compressed air reaches air jet fingers along an inflation pipe (10) to blow up light garbage in the green belt; and
3) sucking the garbage: starting a residue suction pump (27) by the controller (7), forming a negative pressure in an accommodating space formed between each of the air jet finger groups (22) on the ends of the two rotating rods (20) and a dust suction hood (18), so that the light garbage between the two groups of air jet fingers enters a garbage can (28) through a residue extraction pipe (11); and
when cleaning garbage on the ground:
in the case that garbage on the ground needs to be cleaned, driving, by the controller (7), the telescopic rods (19) to drive the rotating rods (20) to withdraw the air jet fingers to an upside of a bottom surface of the dust suction hood (18) so that the dust suction hood (18) can be fitted on the ground to suck garbage or sundries on the ground.
